# EUROPEAN PATENT APPLICATION

(11) **EP 4 152 505 A1**
(43) Date of publication of application: **22.03.2023**
(21) Application number: 21877910.6
(22) Date of filing: 29.09.2021
(51) Int. Cl.: H01M 50/403, H01M 50/449, H01M 50/411, H01M 50/446

(54) **METHOD FOR MANUFACTURING SECONDARY BATTERY SEPARATOR, SEPARATOR MANUFACTURED THEREBY, AND SECONDARY BATTERY HAVING SAME**

(30) Priority: 06.10.2020 KR 20200128921
(71) Applicant: LG Energy Solution, Ltd., Seoul 07335 (KR)
(72) Inventor: CHO, Jin-Hyun, Daejeon 34122 (KR); KIM, Young-Bok, Daejeon 34122 (KR); SUNG, Dong-Wook, Daejeon 34122 (KR); LEE, Jong-Yoon, Daejeon 34122 (KR)
(74) Representative: Hoffmann Eitle
(86) International application number: PCT/KR2021/013392
(87) International publication number: WO 2022/075658

(57) **Abstract**

The present disclosure relates to a separator for a secondary battery, comprising: a porous polymer substrate; a first coating layer disposed on one surface of the porous polymer substrate and including a plurality of inorganic particles and a first binder polymer; a second coating layer disposed on the other surface of the porous polymer substrate and including a plurality of inorganic particles and the first binder polymer; and a third coating layer disposed between the porous polymer substrate and the first coating layer, and/or between the porous polymer substrate and the second coating layer, and including a second binder polymer, wherein the second binder polymer includes a non-wetting polymer. The present disclosure also relates to a method for manufacturing the separator and a secondary battery including the separator. Since the separator includes a non-wetting polymer, it is possible to minimize a deviation in physical properties between the coated one surface and the other surface of the separator.

## Description

### TECHNICAL FIELD

The present application claims priority to Korean Patent Application No. 10-2020-0128921 filed on October 6, 2020 in the Republic of Korea.

The present disclosure relates to a method for manufacturing a separator for a secondary battery, a separator obtained therefrom, and a secondary battery including the same.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles. In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Such a secondary battery generally includes a positive electrode including a positive electrode active material, a negative electrode including a negative electrode active material, a non-aqueous electrolyte including an electrolyte salt and an organic solvent, and a separator interposed between the positive electrode and the negative electrode and functioning to insulate both electrodes electrically from each other.

A polyolefin-based porous substrate used conventionally as a separator for a secondary battery shows a severe heat shrinking behavior at a temperature of 100°C or higher due to its material property and a characteristic during its manufacturing process, including orientation, thereby causing a short-circuit between a positive electrode and a negative electrode.

To solve the above-mentioned safety problems of a secondary battery, there has been suggested a separator having a porous coating layer formed by applying slurry comprising inorganic particles and a binder polymer onto at least one surface of a porous polymer substrate. Recently, a separator having porous coating layers on both surfaces of a porous polymer substrate has been used frequently for a battery for vehicles.

In general, the porous coating layers may be formed on both surfaces of a porous polymer substrate through a dip coating process, which includes dipping the porous polymer substrate in slurry comprising inorganic particles and a binder polymer to form the porous coating layers at the same time. However, such a dip coating process shows a limitation in work speed and has a difficulty in interrupting a dipping system completely from the outside, and thus has a technical limitation, such as a change in solid content caused by continuous evaporation of the solvent in the dipping system during the process. Therefore, a sequential coating process has been used frequently more recently, since it shows better coating processability and productivity.

The sequential coating process refers to a process of coating slurry comprising inorganic particles and a binder polymer on one surface of a porous polymer substrate, and then coating the slurry on the other surface of the porous polymer substrate. However, when using such a sequential coating process, there is a deviation in physical properties between the coated one surface and the other surface, and such a deviation in physical properties significantly affects battery assemblage processability. This is because the binder polymer in the slurry coated on one surface is not in a dried state, when the slurry is coated on the other surface of the porous polymer substrate, and thus the binder polymer infiltrates into the pores of the porous polymer substrate to cause a decrease in absolute amount of the binder polymer required for one surface.

Under these circumstances, there is an imminent need for a technology capable of minimizing a deviation in physical properties between one surface and the other surface of a separator in the case of sequential coating.

### DISCLOSURE

### Technical Problem

The present disclosure is designed to solve the problems of the related art, and therefore the present disclosure is directed to providing a method for manufacturing a separator for a secondary battery, which minimizes the amount of a binder polymer infiltrating into the pores of a porous polymer substrate, when slurry comprising inorganic particles and the binder polymer is coated on the porous polymer substrate through a sequential coating process, and thus can minimize a deviation in physical properties between one surface and the other surface of the separator, while providing excellent thermal safety, a separator obtained by the method and a secondary battery including the same.

### Technical Solution

In one aspect of the present disclosure, there is provided a separator for a secondary battery according to any one of the following embodiments.

According to the first embodiment, there is provided a separator for a secondary battery, including:
a porous polymer substrate;
a first coating layer disposed on one surface of the porous polymer substrate and including a plurality of inorganic particles and a first binder polymer;
a second coating layer disposed on the other surface of the porous polymer substrate and including a plurality of inorganic particles and the first binder polymer; and
a third coating layer disposed between the porous polymer substrate and the first coating layer, and/or between the porous polymer substrate and the second coating layer, and including a second binder polymer,
wherein the second binder polymer includes a non-wetting polymer.

According to the second embodiment, there is provided the separator for a secondary battery as defined in the first embodiment, wherein the content of the third coating layer is 0.066-0.166 parts by weight based on 100 parts by weight of the first coating layer or the second coating layer.

According to the third embodiment, there is provided the separator for a secondary battery as defined in the first or the second embodiment, wherein the non-wetting polymer includes polytetrafluoroethylene (PTFE), fluorinated ethylene propylene (FEP), perfluoroalkoxy (PFA), ethylene tetrafluoroethylene (ETFE), or two or more of them.

According to the fourth embodiment, there is provided the separator for a secondary battery as defined in any one of the first to the third embodiments, wherein the second binder polymer further includes a third binder polymer, and the third binder polymer is an adhesive binder polymer.

According to the fifth embodiment, there is provided the separator for a secondary battery as defined in the fourth embodiment, wherein the third binder polymer includes styrene butadiene rubber (SBR), acrylic copolymer, polyacrylic acid (PAA), polyacrylate salt, carboxymethyl cellulose (CMC), polyvinyl alcohol, or two or more of them.

According to the sixth embodiment, there is provided the separator for a secondary battery as defined in any one of the first to the fifth embodiments, wherein the first binder polymer includes polyvinylidene fluoride, polyvinylidene fluoride-co-hexafluoropropylene, polyvinylidene fluoride-co-trichloroethylene, polyvinylidene fluoride-co-chlorotrifluoroethylene, polymethyl methacrylate, polyacrylonitrile, polyvinyl pyrrolidone, polyvinyl acetate, polyethylene-co-vinyl acetate, polyethylene oxide, cellulose acetate, cellulose acetate butyrate, cellulose acetate propionate, cyanoethylpullulan, cyanoethylpolyvinyla1cho1, cyanoethyl cellulose, cyanoethyl sucrose, pullulan, carboxymethyl cellulose, acrylonitrile-styrene-butadiene copolymer, polyimide, or two or more of them.

In another aspect of the present disclosure, there is provided a method for manufacturing a separator for a secondary battery according to any one of the following embodiments.

According to the seventh embodiment, there is provided a method for manufacturing a separator for a lithium secondary battery, including the steps of:
(S1) preparing a porous polymer substrate;
(S2) coating a coating solution including a second binder polymer on at least one surface of the porous polymer substrate, followed by drying, to obtain a preliminary separator;
(S3) sequentially coating slurry including inorganic particles, a first binder polymer and a solvent for the first binder polymer on one surface and the other surface of the preliminary separator; and
(S4) drying the product of step (S3),
wherein the second binder polymer includes a non-wetting polymer impermeable to the solvent for the first binder polymer.

According to the eighth embodiment, there is provided the method for manufacturing a separator for a secondary battery as defined in the seventh embodiment, wherein the coating solution is loaded in an amount of 0.01-0.015 g/m².

According to the ninth embodiment, there is provided the method for manufacturing a separator for a secondary battery as defined in the seventh or the eighth embodiment, wherein the non-wetting polymer includes polytetrafluoroethylene (PTFE), fluorinated ethylene propylene (FEP), perfluoroalkoxy (PFA), ethylene tetrafluoroethylene (ETFE), or two or more of them.

According to the tenth embodiment, there is provided the method for manufacturing a separator for a secondary battery as defined in any one of the seventh to the ninth embodiments, wherein the coating solution further includes a third binder polymer, and the third binder polymer is an adhesive binder polymer.

According to the eleventh embodiment, there is provided the method for manufacturing a separator for a secondary battery as defined in the tenth embodiment, wherein the third binder polymer includes styrene butadiene rubber (SBR), acrylic copolymer, polyacrylic acid (PAA), polyacrylate salt, carboxymethyl cellulose (CMC), polyvinyl alcohol, or two or more of them.

According to the twelfth embodiment, there is provided the method for manufacturing a separator for a secondary battery as defined in any one of the seventh to the eleventh embodiments, wherein the coating in step (S2) includes spraying the coating solution in the form of gas or microdroplets to at least one surface of the porous polymer substrate.

According to the thirteenth embodiment, there is provided the method for manufacturing a separator for a secondary battery as defined in any one of the seventh to the twelfth embodiments, wherein the first binder polymer includes polyvinylidene fluoride, polyvinylidene fluoride-co-hexafluoropropylene, polyvinylidene fluoride-co-trichloroethylene, polyvinylidene fluoride-co-chlorotrifluoroethylene, polymethyl methacrylate, polyacrylonitrile, polyvinyl pyrro1idone, polyvinyl acetate, polyethylene-co-vinyl acetate, polyethylene oxide, cellulose acetate, cellulose acetate butyrate, cellulose acetate propionate, cyanoethylpullulan, cyanoethylpolyvinyla1cho1, cyanoethyl cellulose, cyanoethyl sucrose, pullulan, carboxymethyl cellulose, acrylonitrile-styrene-butadiene copolymer, polyimide, or two or more of them.

According to the fourteenth embodiment, there is provided the method for manufacturing a separator for a secondary battery as defined in any one of the seventh to the thirteenth embodiments, wherein the slurry is coated sequentially on one surface and the other surface of the preliminary separator, in step (S3), through a gravure roll coating process, a bar coating process, a slot die coating process, a blade coating process, or two or more of them.

In still another aspect of the present disclosure, there is provided a lithium secondary battery according to the following embodiment.

According to the fifth embodiment, there is provided a secondary battery including a positive electrode, a negative electrode and a separator interposed between the positive electrode and the negative electrode, wherein the separator is the separator for a secondary battery as defined in any one of the first to the sixth embodiments.

### Advantageous Effects

The separator for a secondary battery according to an embodiment of the present disclosure includes a third coating layer disposed between a porous polymer substrate and a first coating layer, and/or between a porous polymer substrate and a second coating layer, and including a non-wetting polymer, and thus can minimizes the amount of a first binder polymer infiltrating into the pores of the porous polymer substrate, thereby minimizing a deviation in physical properties between one surface and the other surface of the separator.

In addition, the separator for a secondary battery according to an embodiment of the present disclosure may use a controlled amount of the third coating layer to prevent the non-wetting polymer from infiltrating into the pores of the porous polymer substrate and to minimize a deviation in physical properties between one surface and the other surface of the separator.

The method for manufacturing a separator for a secondary battery according to an embodiment of the present disclosure includes coating a coating solution including a non-wetting polymer impermeable to the solvent for the first binder polymer on at least one surface of the porous polymer substrate. Therefore, even though slurry including inorganic particles and the first binder polymer is coated sequentially on one surface and the other surface of the porous polymer substrate, the amount of the first binder polymer infiltrating into the pores of the porous polymer substrate can be minimized, thereby providing excellent coating processability and productivity, and minimizing a deviation in physical properties between one surface and the other surface of the finished separator.

Further, in the method for manufacturing a separator for a secondary battery according to an embodiment of the present disclosure, the loading amount of the coating solution may be controlled to prevent the non-wetting polymer from infiltrating into the pores of the porous polymer substrate and to minimize a deviation in physical properties between one surface and the other surface of the separator.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a flow chart schematically illustrating the method for manufacturing a separator for a secondary battery according to an embodiment of the present disclosure.
FIG. 2 illustrates a system for sequentially coating slurry including inorganic particles and a first binder polymer in the method for manufacturing a separator for a secondary battery according to an embodiment of the present disclosure.
FIG. 3 is a schematic view illustrating the separator for a secondary battery according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

According to the related art, in order to improve coating processability and productivity, a separator is obtained by coating slurry including inorganic particles and a binder polymer on one surface of a porous polymer substrate, and then sequentially coating the slurry on the other surface of the porous polymer substrate, followed by drying.

However, such a sequential coating process causes the problem of a decrease in content of the binder polymer present finally on one surface of the porous polymer substrate, since the binder polymer in the slurry coated on one surface infiltrates into the pores of the porous polymer substrate, when the slurry is coated on one surface of the porous polymer substrate, and then on the other surface of the porous polymer substrate. Therefore, there is a deviation in physical properties between one surface and the other surface of the finished separator.

Under these circumstance, the inventors of the present disclosure have developed a method for manufacturing a separator, which allows sequential coating of slurry including inorganic particles and a binder polymer on one surface and the other surface of the porous polymer substrate, while preventing the binder polymer in the slurry from infiltrating into the pores of the porous polymer substrate, and thus can minimize a deviation in physical properties between one surface and the other surface of the finished separator, as well as a separator obtained by the method. The present invention is finished based on this.

In one aspect of the present disclosure, there is provided a method for manufacturing a separator for a secondary battery, including the steps of:
(S1) preparing a porous polymer substrate;
(S2) coating a coating solution including a second binder polymer on at least one surface of the porous polymer substrate, followed by drying, to obtain a preliminary separator;
(S3) sequentially coating slurry including inorganic particles, a first binder polymer and a solvent for the first binder polymer on one surface and the other surface of the preliminary separator; and
(S4) drying the product of step (S3),
wherein the second binder polymer includes a non-wetting polymer impermeable to the solvent for the first binder polymer.

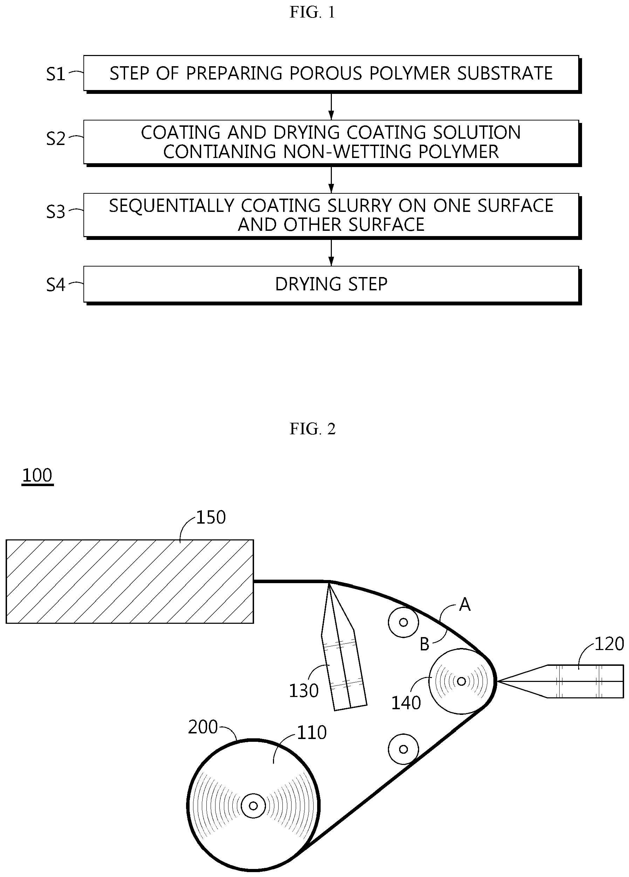

FIG. 1 is a flow chart schematically illustrating the method for manufacturing a separator for a secondary battery according to an embodiment of the present disclosure.

Hereinafter, the method for manufacturing a separator for a secondary battery according to the present disclosure will be explained in detail.

First, a porous polymer substrate is prepared (S1). Any material may be used for the porous polymer substrate with no particular limitation, as long as it can be used conventionally as a material for a separator for a secondary battery. The porous polymer substrate is a thin film including a polymeric material, and non-limiting examples of the polymeric material include at least one selected from polymer resins, such as polyolefin resins, polyethylene terephthalate, polybutylene terephthalate, polyacetal, polyamide, polycarbonate, polyimide, polyetherether ketone, polyether sulfone, polyphenylene oxide, polyphenylene sulfide and polyethylene naphthalene. The porous polymer substrate may include a non-woven web or a porous polymer film formed of such polymeric materials, or a laminate of two or more layers thereof. Particularly, the porous polymer substrate may be any one of the following a) to e):
a) A porous film formed by melting and extruding a polymer resin;
b) A multilayer film formed by stacking two or more layers of the porous films of a);
c) A non-woven web formed by integrating filaments obtained by melting and spinning a polymer resin;
d) A multilayer film formed by stacking two or more layers of the non-woven webs of c); and
e) A porous composite film having a multilayer structure including two or more of a) to d).

The porous polymer substrate may be obtained by forming pores from the above-mentioned materials through a conventional process known to those skilled in the art, such as a wet process using a solvent, a diluent or a pore-forming agent, or a dry process based on orientation, in order to ensure excellent air permeability and porosity.

Next, a coating solution including a second binder polymer is coated on at least one surface of the porous polymer substrate, followed by drying, to obtain a preliminary separator (S2). The coating solution may be coated merely on one surface of the porous polymer substrate, or may be coated on both surfaces of the porous polymer substrate.

The second binder polymer includes a non-wetting polymer impermeable to the solvent for the first binder polymer.

According to the present disclosure, `non-wetting polymer' means a polymer impermeable to the solvent for the first binder polymer in the slurry including the inorganic particles, the first binder polymer and the solvent for the first binder polymer as described hereinafter. The portion where the coating solution including the non-wetting polymer is coated and dried in the preliminary separator shows the lowest affinity to the spreading of the solvent for the first binder polymer. For example, the solvent for the first binder polymer may form spherical droplets having a contact angle of 90° or more at the portion where the coating solution including the non-wetting polymer is coated and dried in the preliminary separator. The contact angle corresponds to an angle between the interface of the solvent for the first binder polymer-vapor and the interface of the solvent for the first binder polymer-preliminary separator, when the preliminary separator and the solvent for the first binder polymer are present under vaporous environment.

Since the non-wetting polymer is impermeable to the solvent for the first binder polymer, the first binder polymer dissolved in the solvent for the first binder polymer cannot pass through the surface of the preliminary separator on which the coating solution including the non-wetting polymer is coated and dried. Thus, it is possible to prevent the first binder polymer from infiltrating into the pores of the porous polymer substrate. As a result, it is possible to minimize a deviation in physical properties between one surface and the other surface of the finished separator.

According to an embodiment of the present disclosure, the non-wetting polymer may be impermeable to an aqueous solvent. When the non-wetting polymer is impermeable to an aqueous solvent, slurry including the first binder polymer dissolved or dispersed in the aqueous solvent cannot pass through the surface of the preliminary separator on which the coating solution including the non-wetting polymer is coated and dried. Thus, it is possible to prevent the first binder polymer in the slurry from infiltrating into the pores of the porous polymer substrate.

According to another embodiment of the present disclosure, the non-wetting polymer may be impermeable to an organic solvent. When the non-wetting polymer is impermeable to an organic solvent, slurry including the first binder polymer dissolved or dispersed in the organic solvent cannot pass through the surface of the preliminary separator on which the coating solution including the non-wetting polymer is coated and dried. Thus, it is possible to prevent the first binder polymer in the slurry from infiltrating into the pores of the porous polymer substrate.

According to an embodiment of the present disclosure, the non-wetting polymer may include polytetrafluoroethylene (PTFE), fluorinated ethylene propylene (FEP), perfluoroalkoxy (PFA), ethylene tetrafluoroethylene (ETFE), or two or more of them. The non-wetting polymer does not include polyvinylidene fluoride (PVDF).

According to an embodiment of the present disclosure, the non-wetting polymer may be used in an amount of 90-99.9 wt%, or 92-98 wt%, based on 100 wt% of the coating solution. When the non-wetting polymer is used within the above-defined range in the coating solution, it is possible to facilitate preventing the first binder polymer in the slurry from passing through the surface of the preliminary separator on which the coating solution including the non-wetting polymer is coated and dried.

According to an embodiment of the present disclosure, the coating solution may further include a third binder polymer, and the third binder polymer may be an adhesive binder polymer.

The third binder polymer may be used for supplementing the non-wetting polymer having low adhesiveness. The third binder polymer is not particularly limited, as long as it can be mixed with the non-wetting polymer to form a coating solution.

According to an embodiment of the present disclosure, the third binder polymer may include styrene butadiene rubber (SBR), acrylic copolymer, polyacrylic acid (PAA), polyacrylate salt, carboxymethyl cellulose (CMC), polyvinyl alcohol, or two or more of them.

The acrylic copolymer may include ethyl acrylate-acrylic acid-N,N-dimethyl acrylamide copolymer, ethyl acrylate-acrylic acid-2-(dimethylamino)ethyl acrylate copolymer, ethyl acrylate-acrylic acid-N,N-diethylacrylamide copolymer, ethyl acrylate-acrylic acid-2-(diethylamino)ethyl acrylate copolymer, or two or more of them, but is not limited thereto.

According to an embodiment of the present disclosure, the content of the third binder polymer may be 0.1-5 wt%, or 1-2 wt%, based on 100 wt% of the coating solution. When the content of the third binder polymer satisfies the above-defined range, it is easier that the non-wetting polymer may be present in the coating solution in an amount sufficient to prevent the first binder polymer in the slurry from infiltrating into the pores of the porous polymer substrate, while supplementing such low adhesiveness of the non-wetting polymer.

According to an embodiment of the present disclosure, the coating solution may be a solution including the non-wetting polymer dissolved in an organic solvent. When the coating solution is a solution, the organic solvent may include N-methyl-2-pyrrolidone (NMP), or the like.

According to another embodiment of the present disclosure, the coating solution may be a suspension.

According to still another embodiment of the present disclosure, the coating solution may be an emulsion. When the coating solution is an emulsion, it includes a dispersion medium and may be obtained by adding gaseous monomers of the non-wetting polymer to a continuous phase in which a surfactant is dissolved. Herein, the dispersion medium may be water, or the like.

The surfactant may include ammonium perfluorocarboxylate, ammonium perfluorocaprylate, ammonium perfluorooctanoate, or two or more of them.

The surfactant may be used in an amount of 0.02-2 wt%, or 0.5-1 wt%, based on 100 wt% of the coating solution. When the surfactant is used within the above-defined range, it is easier to impart sufficient emulsion stability to the coating solution.

The coating solution may be prepared at 40-80°C for 1-12 hours.

According to an embodiment of the present disclosure, the coating solution may be loaded in an amount of 0.01-0.015 g/m², or 0.012-0.014 g/m². When the loading amount of the coating solution satisfies the above-defined range, it is possible to prevent the first binder polymer from infiltrating into the pores of the porous polymer substrate and to facilitate preventing the non-wetting polymer from infiltrating into the pores of the porous polymer substrate.

In addition, when the loading amount of the coating solution satisfies the above-defined range, it is possible to facilitate preventing the non-wetting polymer from infiltrating into the pores of the porous polymer substrate, and thus to improve the air permeability of the finished separator.

The coating solution may be coated on at least one surface of the porous polymer substrate through a conventional method known to those skilled in the art. The method for coating the coating solution on at least one surface of the porous polymer substrate may be a conventional method known to those skilled in the art.

According to an embodiment of the present disclosure, the coating in step (S2) may include a step of spraying the coating solution in the form of gas or microdroplets to at least one surface of the porous polymer substrate. Particularly, the coating solution may be coated on at least one surface of the porous polymer substrate through a coating process using a sprayer. When the coating solution is sprayed and coated in the form of gas or microdroplets, it may be coated on the whole of the porous polymer substrate to a relatively small thickness. Thus, it is possible to facilitate preventing the non-wetting polymer in the coating solution from infiltrating into the pores of the porous polymer substrate.

The coating solution coated on at least one surface of the porous polymer substrate may be dried through a conventional method known to those skilled in the art. According to an embodiment of the present disclosure, the drying may be carried out at 40-90°C, or 65-75°C, for 10 minutes to 1 hour, or 30-50 minutes.

According to an embodiment of the present disclosure, the drying may further include a step of drying the coating solution naturally at room temperature for 1 day or more.

Then, slurry including inorganic particles, a first binder polymer and a solvent for the first binder polymer is coated sequentially on one surface and the other surface of the preliminary separator (S3).

There is no particular limitation in the inorganic particles, as long as they are electrochemically stable. In other words, there is no particular limitation in the inorganic particles that may be used herein, as long as they cause no oxidation and/or reduction in the range (e.g. 0-5 V based on Li/Li⁺) of operating voltage of an applicable electrochemical device.

According to an embodiment of the present disclosure, the inorganic particles may be high-dielectric constant inorganic particles having a dielectric constant of 5 or more, or 10 or more, inorganic particles having lithium-ion transportability or a combination thereof. Non-limiting examples of the inorganic particles having a dielectric constant of 5 or more may include BaTiO₃, BaSO₄, Pb(Zr,Ti)O₃ (PZT), Pb₁₋ₓLaₓZr_{1-y}Ti_{y}O₃ (PLZT, wherein 0 < x < 1, 0 < y < 1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, Y₂O₃, SiO₂, Al₂O₃, γ-AlOOH, Al(OH)₃, SiC, TiO₂, or the like, alone or in combination. However, the scope of the present disclosure is not limited thereto.

According to an embodiment of the present disclosure, although there is no particular limitation in the particle size of the inorganic particles of the porous coating layer, the inorganic particles may have a particle size of about 0.01-10 µm or about 0.05-1.0 µm. When the size of the inorganic particles satisfies the above-defined range, the inorganic particles is easier to maintain dispersibility to facilitate controlling the physical properties of the separator for a secondary battery. In addition, it is possible to improve the mechanical properties. Further, it is less likely that an internal short-circuit occurs during the charge/discharge of a battery due to an excessively large pore size.

The term `average particle diameter of the inorganic particles' means a D₅₀ particle diameter, and 'D₅₀ particle diameter' means a particle diameter at a point of 50% in the particle number accumulated distribution depending on particle diameter. The particle diameter may be determined by using a laser diffraction method. Particularly, powder to be analyzed is dispersed in a dispersion medium and introduced to a commercially available laser diffraction particle size analyzer (e.g. Microtrac S3500), and then a difference in diffraction pattern depending on particle size is determined, when particles pass through laser beams, and then particle size distribution is calculated. Then, the particle diameter at a point of 50% of the particle number accumulated distribution depending on particle diameter is calculated to determine D₅₀.

According to an embodiment of the present disclosure, the first binder polymer may include polyvinylidene fluoride, polyvinylidene fluoride-co-hexafluoropropylene, polyvinylidene fluoride-co-trichloroethylene, polyvinylidene fluoride-co-chlorotrifluoroethylene, polymethyl methacrylate, polyacrylonitrile, polyvinyl pyrrolidone, polyvinyl acetate, polyethylene-co-vinyl acetate, polyethylene oxide, cellulose acetate, cellulose acetate butyrate, cellulose acetate propionate, cyanoethylpullulan, cyanoethylpolyvinyla1cho1, cyanoethyl cellulose, cyanoethyl sucrose, pullulan, carboxymethyl cellulose, acrylonitrile-styrene-butadiene copolymer, polyimide, or two or more of them. However, the scope of the present disclosure is not limited thereto.

According to an embodiment of the present disclosure, the weight ratio of the inorganic particles to the first binder polymer may be 20:80-99.9:0.1, 50:50-99.5:0.5, or 70:30-80:20. When the weight ratio of the inorganic particles to the first binder polymer satisfies the above-defined range, it is easier to ensure vacant spaces formed among the inorganic particles sufficiently, while ensuring sufficient adhesion among the inorganic particles.

The solvent for the first binder polymer may function as a solvent capable of dissolving the first binder polymer, or as a dispersion medium not capable of dissolving the first binder polymer but capable of dispersing the first binder polymer, depending on the particular type of the first binder polymer.

According to an embodiment of the present disclosure, the solvent for the first binder polymer may be an aqueous solvent. For example, the solvent for the first binder polymer may be water. When the solvent for the first binder polymer is an aqueous solvent, the non-wetting polymer is impermeable to the aqueous solvent.

According to another embodiment of the present disclosure, the solvent for the first binder polymer may be an organic solvent. For example, the solvent for the first binder polymer may be acetone, tetrahydrofuran, methylene chloride, chloroform, dimethyl formamide, N-methyl-2-pyrrolidone, cyclohexane, or two or more of them. When the solvent for the first binder polymer is an organic solvent, the non-wetting polymer is impermeable to the organic solvent.

According to an embodiment of the present disclosure, the slurry may further include a dispersant, besides the inorganic particles and the first binder polymer.

According to an embodiment of the present disclosure, the dispersant may include carboxymethyl cellulose (CMC), polyacrylic acid (PAA), polymethacrylic acid (PMAA), cyano resin, or two or more of them.

According to an embodiment of the present disclosure, the dispersant may be used in an amount of 0.1-2 parts by weight, or 0.5-1.5 parts by weight, based on 100 parts by weight of the inorganic particles.

According to an embodiment of the present disclosure, the slurry may be prepared by dissolving or dispersing the first binder polymer into a solvent for the first binder polymer, adding the inorganic particles thereto and dispersing them. The inorganic particles may be added after they are pulverized in advance to a predetermined average particle diameter. Otherwise, the inorganic particles may be added to a solution including the first binder polymer dissolved therein, and then pulverized and dispersed, while controlling them to have a predetermined average particle diameter by using a ball milling process, or the like.

According to the present disclosure, step (S3) is a step of coating the slurry on one surface of the preliminary separator, and then sequentially coating the slurry on the other surface of the preliminary separator. In other words, step (S3) includes the steps of: coating the slurry on one surface of the preliminary separator; and coating the slurry on the other surface of the preliminary separator. When coating the slurry on the other surface of the preliminary separator, the slurry coated on one surface of the preliminary separator is not dried yet. In other words, the slurry is coated on the other surface of the preliminary separator, before the slurry coated on one surface of the preliminary separator is dried.

FIG. 2 illustrates an embodiment of the system for sequentially coating slurry including inorganic particles and a first binder polymer in the method for manufacturing a separator for a secondary battery according to an embodiment of the present disclosure.

Referring to FIG. 2, the coating system 100 includes: a feed roll 110 configured to supply a preliminary separator 200; a first coating unit 120 configured to apply the slurry onto one surface A of the preliminary separator 200; a second coating unit 130 configured to apply the slurry onto the other surface B of the preliminary separator 200; rotating rollers 140 configured to convey the preliminary separator 200 by frictional force, while being in contact with any one surface of the above-mentioned one surface A and the other surface B of the preliminary separator 200; and a drier 150 configured to dry the double side-coated preliminary separator 200.

According to an embodiment of the present disclosure, the method for sequentially coating the slurry on one surface and the other surface of the preliminary separator in step (S3) may include a gravure roll coating process, a bar coating process, a slot die coating process, a blade coating process, or two or more of them.

According to an embodiment of the present disclosure, phase separation may be carried out in step (S3). The phase separation process means a process of forming a pore structure through the phase separation phenomenon known to those skilled in the art. For example, the phase separation process may be carried out by vapor induced phase separation or immersion phase separation.

First, the vapor induced phase separation will be explained.

The vapor induced phase separation refers to phase separation occurring when the separator is exposed to the atmosphere of the non-solvent for the first binder polymer. Herein, the non-solvent may be introduced in a gaseous state. The non-solvent is not particularly limited, as long as it does not dissolve the first binder polymer but is partially compatible with the solvent for the first binder polymer. For example, the non-solvent may be water, methanol, ethanol, isopropanol, butanol, or two or more of them. The vapor induced phase separation may be carried out at 15-70°C or 20-50°C under a relative humidity of 15-80% or 30-50%.

Next, the immersion phase separation will be explained.

The preliminary separator coated with the slurry is dipped in a coagulant solution including a non-solvent for the first binder polymer. During such dipping, the slurry coated on the preliminary separator is converted into a porous body, while the first binder polymer is solidified. Then, the resultant product is washed with water to remove the coagulant solution, followed by drying. In the immersed phase separation, the non-solvent may be used in an amount of 60 wt% or more, based on 100 wt% of the coagulant solution, with a view to formation of a high-quality pore structure and improvement of productivity.

After that, the product of step (S3) is dried (S4). In step (S3), while the slurry coated on one surface of the preliminary separator is not dried, the slurry on the other surface of the preliminary separator is coated. After coating the slurry on the other surface of the preliminary separator, the slurry coated on one surface of the preliminary separator and the slurry coated on the other surface are dried at the same time in step (S4).

According to an embodiment of the present disclosure, the drying may be carried out through a drying process used for manufacturing a conventional separator. For example, the drying may be carried out at 30-100°C, or 40-70°C. In addition, the drying may be carried out by using air for 3-45 seconds, or 5-40 seconds. When the drying time satisfies the above-defined range, it is easier to remove the remaining solvent or dispersion medium, while not adversely affecting productivity.

When using the method for manufacturing a separator for a secondary battery according to the present disclosure, at least one surface of the porous polymer substrate is coated with a coating solution including a non-wetting polymer impermeable to the solvent for the first binder polymer, and thus the amount of the first binder polymer infiltrating into the porous polymer surface may be minimized, even though the slurry including inorganic particles and the first binder polymer is coated sequentially on one surface and the other surface of the preliminary separator coated with the coating solution. Therefore, it is possible to minimize a deviation in physical properties between one surface and the other surface of the finished separator, while providing excellent slurry coating processability and separator productivity.

In another aspect of the present disclosure, there is provided a separator for a secondary battery, including:
a porous polymer substrate;
a first coating layer disposed on one surface of the porous polymer substrate and including a plurality of inorganic particles and a first binder polymer;
a second coating layer disposed on the other surface of the porous polymer substrate and including a plurality of inorganic particles and the first binder polymer; and
a third coating layer disposed between the porous polymer substrate and the first coating layer, and/or between the porous polymer substrate and the second coating layer, and including a second binder polymer,
wherein the second binder polymer includes a non-wetting polymer.

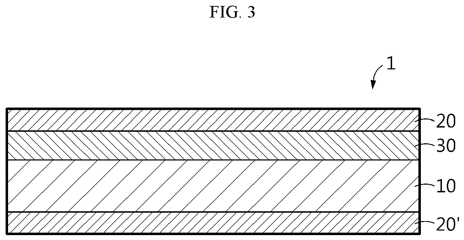

FIG. 3 is a schematic view illustrating the separator for a secondary battery according to an embodiment of the present disclosure.

Referring to FIG. 3, the separator 1 for a secondary battery includes a porous polymer substrate 10.

Reference will be made to the above description about the porous polymer substrate 10.

According to an embodiment of the present disclosure, the porous polymer substrate 10 may have a thickness of 5-50 µm. The thickness of the porous polymer substrate is not limited to the above-defined range. However, when the thickness is within the above-defined range, it is easier to prevent the separator from being damaged easily during the use of a battery and to ensure energy density. Meanwhile, although the pore size and porosity of the porous polymer substrate are not limited particularly, the pore size and porosity may be 0.01-50 µm and 10-95%, respectively.

According to the present disclosure, the porosity and average pore size of the porous polymer substrate 10 may be determined from scanning electron microscopic (SEM) images, by using a mercury porosimeter or capillary flow porosimeter, or through the BET6-point method based on nitrogen gas adsorption flow using a porosimetry analyzer (e.g. Belsorp-II mini, Bell Japan Inc.).

Referring to FIG. 3, the separator 1 for a secondary battery includes a first coating layer 20 including a plurality of inorganic particles and a first binder polymer on one surface of the porous polymer substrate 10.

In addition, the separator 1 for a secondary battery includes a second coating layer 20' including a plurality of inorganic particles and the first binder polymer on the other surface of the porous polymer substrate 10.

Each of the first coating layer 20 and the second coating layer 20' includes a plurality of inorganic particles (not shown) and the first binder polymer (not shown) with which the inorganic particles are attached to one another so that they may retain their binding states (in other words, the first binder polymer connects the inorganic particles with one another and fixes them). In addition, the inorganic particles and the porous polymer substrate 10 and/or the third coating layer described hereinafter may retain their binding states by the first binder polymer.

Each of the first coating layer 20 and the second coating layer 20' prevents the porous polymer substrate 10 from exhibiting a severe heat shrinking behavior by virtue of the inorganic particles, thereby providing the separator with improved safety.

Since the separator 1 for a secondary battery according to the present disclosure includes the first coating layer 20 on one surface of the porous polymer substrate and the second coating layer 20' on the other surface of the porous polymer substrate, it is possible to further improve the safety of the separator, as compared to a separator including a porous coating layer including inorganic particles and a binder polymer merely on one surface of the separator.

Reference will be made to the above description about the inorganic particles and the first binder polymer.

According to an embodiment of the present disclosure, in the first coating layer 20 and/or the second coating layer 20', the inorganic particles may be bound to one another by the first binder polymer, while they are packed and are in contact with one another, thereby forming interstitial volumes among the inorganic particles, and the interstitial volumes among the inorganic particles become vacant spaces to form pores.

According to an embodiment of the present disclosure, the first coating layer 20 and/or the second coating layer 20' may have a thickness of 1-50 µm, 2-30 µm, or 2-20 µm.

According to an embodiment of the present disclosure, the first coating layer 20 and/or the second coating layer 20' may have an average pore size of 0.001-10 µm, or 0.001-1 µm.

According to an embodiment of the present disclosure, the first coating layer 20 and/or the second coating layer 20' may have a porosity of 5-95%, 10-95%, 20-90%, or 30-80%. The porosity corresponds to a value obtained by subtracting the volume, expressed from the weight and density of each ingredient in the first coating layer 20 and/or the second coating layer 20', from the volume calculated from the thickness, width and length of the first coating layer 20 and/or the second coating layer 20'.

According to the present disclosure, the porosity and average pore size of the first coating layer 20 and/or the second coating layer 20' may be determined from scanning electron microscopic (SEM) images, by using a mercury porosimeter or capillary flow porosimeter, or through the BET6-point method based on nitrogen gas adsorption flow using a porosimetry analyzer (e.g. Belsorp-II mini, Bell Japan Inc.).

Referring to FIG. 3, according to an embodiment of the present disclosure, the separator 1 for a secondary battery may include a third coating layer 30 between the porous polymer substrate 10 and the first coating layer 20.

According to another embodiment of the present disclosure, the separator 1 for a secondary battery may include a third coating layer 30 between the porous polymer substrate 10 and the second coating layer 20'.

According to still another embodiment of the present disclosure, the separator 1 for a secondary battery may include a third coating layer 30 between the porous polymer substrate 10 and the first coating layer 20, as well as between the porous polymer substrate 10 and the second coating layer 20'. When the third coating layer 30 is disposed on both surfaces of the porous polymer substrate 10, i.e. between the porous polymer substrate 10 and the first coating layer 20, as well as between the porous polymer substrate 10 and the second coating layer 20', it is possible to prevent the first binder polymer of the first coating layer 20 and the second coating layer 20' from infiltrating into the pores of the porous polymer substrate 10 more effectively.

In FIG. 3, the third coating layer 30 is disposed between the porous polymer substrate 10 and the first coating layer 20. However, the third coating layer may be disposed between the porous polymer substrate 10 and the first coating layer 20 and/or between the porous polymer substrate 10 and the second coating layer 20', as long as it is disposed between the preliminarily formed coating layer, including a plurality of inorganic particles and the first binder polymer, and the porous polymer substrate.

The third coating layer 30 includes a non-wetting polymer. Reference will be made to the above description about the non-wetting polymer. Since the third coating layer 30 includes the non-wetting polymer, it is possible to prevent the first binder polymer in at least one of the first coating layer 20 and the second coating layer 20' from infiltrating into the pores of the porous polymer substrate 10.

According to an embodiment of the present disclosure, the second binder polymer may further include a third binder polymer, and the third binder polymer may be an adhesive binder polymer. The third binder polymer is used to allow the third coating layer 30 to maintain a state in which it is bound to at least one of the first coating layer 20 and the second coating layer 20' and/or the porous polymer substrate 10. The non-wetting polymer may show significantly poor adhesion. Thus, the third binder polymer facilitates binding of the third coating layer 30 with at least one of the first coating layer 20 and the second coating layer 20' and/or the porous polymer substrate 10.

Reference will be made to the above description about the type and content of the third binder polymer.

According to an embodiment of the present disclosure, the content of the third coating layer 30 may be 0.066-0.166 parts by weight, or 0.1-0.166 parts by weight, based on 100 parts by weight of the first coating layer or the second coating layer. When the content of the third coating layer 30 satisfies the above-defined range, it is possible to prevent the first binder polymer from infiltrating into the pores of the porous polymer substrate, while preventing the non-wetting polymer in the third coating layer 30 from infiltrating into the pores of the porous polymer substrate more easily.

In addition, when the content of the third coating layer 30 satisfies the above-defined range, it is easier to prevent the non-wetting polymer in the third coating layer 30 from infiltrating into the pores of the porous polymer substrate, and to further improve the air permeability of the finished separator.

According to an embodiment of the present disclosure, the third coating layer 30 may have a thickness of 0.01-0.1 µm, or 0.05-0.1 µm. When the thickness of the third coating layer 30 satisfies the above-defined range, it is possible to prevent the first binder polymer in at least one of the first coating layer 20 and the second coating layer 20' from infiltrating into the pores of the porous polymer substrate 10, while preventing the non-wetting polymer from infiltrating into the pores of the porous polymer substrate 10 more easily.

The separator for a secondary battery according to an embodiment of the present disclosure includes the third coating layer 30 including the non-wetting polymer on at least one surface of the porous polymer substrate, and thus it is possible to prevent the first binder polymer in at least one of the first coating layer and the second coating layer from infiltrating into the pores of the porous polymer substrate. Therefore, the first binder may be present in a sufficient amount not only on one surface but also on the other surface of the separator, and thus it is possible to minimize a deviation in physical properties between one surface and the other surface of the separator.

In the separator for a secondary battery according to an embodiment of the present disclosure, the first binder polymer is present in a sufficient amount not only on one surface but also on the other surface, and thus it is possible to minimize a deviation in adhesion to an electrode between one surface and the other surface.

In addition, since the first binder polymer is present in a sufficient amount not only on one surface but also on the other surface, it is possible to prevent the inorganic particles from being detached from the porous polymer substrate not only on one surface but also on the other surface. Thus, it is possible to ensure adhesion to an electrode on both surfaces of the separator.

The separator for a secondary battery may be interposed between a positive electrode and a negative electrode to obtain a secondary battery.

The secondary battery according to the present disclosure preferably includes a lithium secondary battery. Particular examples of the lithium secondary battery include lithium metal secondary batteries, lithium-ion secondary batteries, lithium polymer secondary batteries, lithium-ion polymer secondary batteries, or the like.

The electrodes used in combination with the separator according to the present disclosure are not particularly limited, and may be obtained by allowing electrode active materials to be bound to an electrode current collector through a method generally known in the art.

When the secondary battery is a lithium secondary battery, non-limiting examples of the positive electrode active material include conventional positive electrode active materials that may be used for the positive electrodes for conventional electrochemical devices. Particularly, lithium manganese oxides, lithium cobalt oxides, lithium nickel oxides, lithium iron oxides or lithium composite oxides containing a combination thereof are used preferably.

When the secondary battery is a lithium secondary battery, non-limiting examples of the negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, are used preferably.

Non-limiting examples of the positive electrode current collector include foil made of aluminum, nickel or a combination thereof, and non-limiting examples of the negative electrode current collector include foil made of copper, gold, nickel, copper alloys or a combination thereof.

When the secondary battery is a lithium secondary battery, the electrolyte that may be used in the lithium secondary battery according to the present disclosure is a salt having a structure of A⁺B⁻, wherein A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

According to an embodiment of the present disclosure, the separator for a secondary battery may be applied to a battery through lamination, stacking and folding of the separator with electrodes, besides a conventional process, winding.

According to an embodiment of the present disclosure, the separator for a secondary battery may be interposed between the positive electrode and the negative electrode. When an electrode assembly is formed by assembling a plurality of cells or electrodes, the separator may be interposed between the adjacent cells or electrodes. The electrode assembly may have various structures, such as a simple stack type, a jelly-roll type, a stacked-folded type, a laminated-stacked type, or the like.

### MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

First, 97 parts by weight of aqueous dispersion of polytetrafluoroethylene (PTFE) (Teflon^{™} available from Dupont Co.), 1 part by weight of a surfactant (5 wt% of ethanol, 95 wt% of water), and 2 parts by weight of an acrylic copolymer (zeon PX-LP17) were mixed to prepare a coating solution.

Next, 0.014 g/m² of the coating solution was spray coated on both surfaces of a polyethylene porous substrate (available from SEMOORP Co., thickness: 9 µm) to obtain a preliminary separator, which, in turn, was dried at 70°C for 30 minutes to remove water. Then, the preliminary separator was dried naturally at room temperature for 1 day.

Then, 78 parts by weight of Al₂O₃ (available from Sumitomo, average particle diameter: 500 nm) as inorganic particles, 21 parts by weight of polyvinylidene fluoride (PVDF) (Solvay Co.) as a first binder polymer, and 1 part by weight of cyano resin (available from Shin-Etsu Co.) as a dispersant were mixed with 100 parts by weight of acetone to prepare slurry, and the slurry was coated on one surface of the preliminary separator by using a bar coater (loading amount: 7.5 g/m²).

After that, before the slurry coated on one surface is dried, the slurry was coated on the other surface of the preliminary separator (loading amount: 7.5 g/m²), and dried at 50°C for 5 minutes under a relative humidity of 50% to obtain a separator for a secondary battery.

### Example 2

A separator was obtained in the same manner as Example 1, except that 1.48 g/m² of the coating solution prepared according to Example 1 was coated on one surface of a polyethylene porous substrate (available from SEMOORP Co., thickness: 9 µm) by using a bar coater, and the slurry was prepared by mixing 78 parts by weight of Al₂O₃ (available from Sumitomo, average particle diameter: 500 nm) as inorganic particles, 21 parts by weight of polyvinylidene fluoride (PVDF) (Solvay Co.) as a first binder polymer, and 1 part by weight of cyano resin (available from Shin-Etsu Co.) as a dispersant with 100 parts by weight of acetone.

### Comparative Example 1

First, 78 parts by weight of Al₂O₃ (available from Sumitomo, average particle diameter: 500 nm) as inorganic particles, 21 parts by weight of polyvinylidene fluoride (PVDF) (Solvay Co.) as a first binder polymer, and 1 part by weight of cyano resin (available from Shin-Etsu Co.) as a dispersant were mixed with 100 parts by weight of acetone to prepare slurry. Then, the slurry was coated on one surface of a polyethylene porous substrate (available from SEMOORP Co., thickness: 9 µm) by using a bar coater (loading amount: 7.5 g/m²).

After that, before the slurry coated on one surface is dried, the slurry was coated on the other surface of the preliminary separator (loading amount: 7.5 g/m²), and dried at 50°C for 5 minutes under a relative humidity of 50% to obtain a separator for a secondary battery.

### Test Examples: Determination of Physical Properties of Both Surfaces of Separator

Each of the separators according to Examples 1 and 2 and Comparative Example 1 was determined in terms of the thickness of both surfaces of the separator, air permeability, peel strength, and adhesion to an electrode (Lami force). The results are shown in the following Table 1.

### (1) Determination of Air Permeability of Both Surfaces of Separator

The air permeability of both surfaces of the separator was determined by the method as defined in ASTM D726-94. Herein, the air permeability value was determined as time (second), i.e. air permeation time, required for 100 mL of air to pass through a section of 1 in² of the separator according to each of Examples 1 and 2 and Comparative Examples 1 under a pressure of 12.2 inH₂O.

### (2) Determination of Peel Strength of Both Surfaces of Separator

The peel strength of both surfaces of the separator was determined by fixing each of the separators according to Examples 1 and 2 and Comparative Example 1 on a glass plate by using a double-sided tape, attaching a tape (transparent tape available from 3M Co.) firmly to each of the first coating layer on one surface and the second coating layer on the other surface of the exposed separator, and then measuring force (gf/15 mm) required for detaching the tape by using a tensile strength tester.

### (3) Determination of Adhesion to Electrode (Lami Force) of Both Surfaces of Separator

The adhesion to an electrode of both surfaces of the separator was determined by disposing one surface and the other surface of each of the separators according to Examples 1 and 2 and Comparative Example 1 in such a manner that they might face the electrode, passing the resultant structure through a press at a temperature of 60°C and a pressure of 6.5 mPa, and then measuring peel force required for separating the electrode and the separator from each other.

The electrode was obtained as follows.

First, natural graphite, styrene butadiene rubber (SBR), carboxymethyl cellulose (CMC) and a conductive material were introduced to water at a weight ratio of 90:2.5:2.5:5 to obtain a negative electrode slurry. Next, the negative electrode slurry was coated on copper (Cu) foil (thickness 20 µm) at a loading amount of 5 mg/cm², followed by drying. Then, the resultant structure was pressed at 90°C under 8.5 MPa and cut into a size of 60 mm (length) x 25 mm (width) to obtain the negative electrode.

**[Table 1]**

| | | Example 1 | Example 2 | Comparative Example 1 |
|---|---|---|---|---|
| Thickness (µm) | | 19.0 | 19.5 | 19.4 |
| Air permeability (sec/100 mL) | | 160 | 215 | 210 |
| Peel strength (gf/15 mm) | One surface | 106 | 80 | 75 |
| | The other surface | 176 | 180 | 195 |
| Negative electrode-separator Lami force (gf/25 mm) | One surface | 113 | 75 | 82 |
| | The other surface | 121 | 100 | 115 |

As can be seen from Table 1, each of the separators according to Examples 1 and 2 shows a significantly smaller deviation in peel strength and adhesion to the electrode between one surface and the other surface of the separator, as compared to Comparative Example 1.

Particularly, it can be seen that the separator according to Example 1 shows a significantly smaller deviation in peel strength and adhesion to the electrode between one surface and the other surface of the separator, as compared to Example 2. It can be also seen that the separator according to Example 1 shows the highest air permeability.

On the other hand, it can be seen that the separator according to Comparative Example 1 shows a significantly large deviation in peel strength and adhesion to the electrode between one surface and the other surface of the separator.

## Claims

1. A separator for a secondary battery, comprising:
a porous polymer substrate;
a first coating layer disposed on one surface of the porous polymer substrate and comprising a plurality of inorganic particles and a first binder polymer;
a second coating layer disposed on the other surface of the porous polymer substrate and comprising a plurality of the inorganic particles and the first binder polymer; and
a third coating layer disposed between the porous polymer substrate and the first coating layer, and/or between the porous polymer substrate and the second coating layer, and comprising a second binder polymer,
wherein the second binder polymer comprises a non-wetting polymer.

2. The separator for a secondary battery according to claim 1, wherein the content of the third coating layer is 0.066-0.166 parts by weight based on 100 parts by weight of the first coating layer or the second coating layer.

3. The separator for a secondary battery according to claim 1, wherein the non-wetting polymer comprises polytetrafluoroethylene (PTFE), fluorinated ethylene propylene (FEP), perfluoroalkoxy (PFA), ethylene tetrafluoroethylene (ETFE), or two or more of them.

4. The separator for a secondary battery according to claim 1, wherein the second binder polymer further comprises a third binder polymer, and the third binder polymer is an adhesive binder polymer.

5. The separator for a secondary battery according to claim 4, wherein the third binder polymer comprises styrene butadiene rubber (SBR), acrylic copolymer, polyacrylic acid (PAA), polyacrylate salt, carboxymethyl cellulose (CMC), polyvinyl alcohol, or two or more of them.

6. The separator for a secondary battery according to claim 1, wherein the first binder polymer comprises polyvinylidene fluoride, polyvinylidene fluoride-co-hexafluoropropylene, polyvinylidene fluoride-co-trichloroethylene, polyvinylidene fluoride-co-chlorotrifluoroethylene, polymethyl methacrylate, polyacrylonitrile, polyvinyl pyrrolidone, polyvinyl acetate, polyethylene-co-vinyl acetate, polyethylene oxide, cellulose acetate, cellulose acetate butyrate, cellulose acetate propionate, cyanoethylpullulan, cyanoethylpolyvinyla1cho1, cyanoethyl cellulose, cyanoethyl sucrose, pullulan, carboxymethyl cellulose, acrylonitrile-styrene-butadiene copolymer, polyimide, or two or more of them.

7. A method for manufacturing a separator for a secondary battery, comprising the steps of:
(S1) preparing a porous polymer substrate;
(S2) coating a coating solution comprising a second binder polymer on at least one surface of the porous polymer substrate, followed by drying, to obtain a preliminary separator;
(S3) sequentially coating slurry comprising inorganic particles, a first binder polymer and a solvent for the first binder polymer on one surface and the other surface of the preliminary separator; and
(S4) drying the product of step (S3),
wherein the second binder polymer comprises a non-wetting polymer impermeable to the solvent for the first binder polymer.

8. The method for manufacturing a separator for a secondary battery according to claim 7, wherein the coating solution is loaded in an amount of 0.01-0.015 g/m2.

9. The method for manufacturing a separator for a secondary battery according to claim 7, wherein the non-wetting polymer comprises polytetrafluoroethylene (PTFE), fluorinated ethylene propylene (FEP), perfluoroalkoxy (PFA), ethylene tetrafluoroethylene (ETFE), or two or more of them.

10. The method for manufacturing a separator for a secondary battery according to claim 7, wherein the coating solution further comprises a third binder polymer, and the third binder polymer is an adhesive binder polymer.

11. The method for manufacturing a separator for a secondary battery according to claim 10, wherein the third binder polymer comprises styrene butadiene rubber (SBR), acrylic copolymer, polyacrylic acid (PAA), polyacrylate salt, carboxymethyl cellulose (CMC), polyvinyl alcohol, or two or more of them.

12. The method for manufacturing a separator for a secondary battery according to claim 7, wherein the coating in step (S2) comprises spraying the coating solution in the form of gas or microdroplets to at least one surface of the porous polymer substrate.

13. The method for manufacturing a separator for a secondary battery according to claim 7, wherein the first binder polymer comprises polyvinylidene fluoride, polyvinylidene fluoride-co-hexafluoropropylene, polyvinylidene fluoride-co-trichloroethylene, polyvinylidene fluoride-co-chlorotrifluoroethylene, polymethyl methacrylate, polyacrylonitrile, polyvinyl pyrrolidone, polyvinyl acetate, polyethylene-co-vinyl acetate, polyethylene oxide, cellulose acetate, cellulose acetate butyrate, cellulose acetate propionate, cyanoethylpullulan, cyanoethylpolyvinyla1cho1, cyanoethyl cellulose, cyanoethyl sucrose, pullulan, carboxymethyl cellulose, acrylonitrile-styrene-butadiene copolymer, polyimide, or two or more of them.

14. The method for manufacturing a separator for a secondary battery according to claim 7, wherein the slurry is coated sequentially on one surface and the other surface of the preliminary separator, in step (S3), through a gravure roll coating process, a bar coating process, a slot die coating process, a blade coating process, or two or more of them.

15. A secondary battery comprising a positive electrode, a negative electrode and a separator interposed between the positive electrode and the negative electrode, wherein the separator is the separator for a secondary battery as defined in any one of claims 1 to 6.
